# EUROPEAN PATENT SPECIFICATION

(11) **EP 4 044 510 B1**
(45) Date of publication and mention of the grant of the patent: **25.02.2026**
(21) Application number: 20880876.6
(22) Date of filing: 31.10.2020
(51) Int. Cl.: H04L 41/0631, H04L 43/0811, H04L 45/00, H04L 43/10, H04L 45/24

(54) **METHOD AND APPARATUS FOR DETECTING LINK STATES**
VERFAHREN UND VORRICHTUNG ZUM DETEKTIEREN VON LINK-ZUSTÄNDEN
PROCÉDÉ ET APPAREIL PERMETTANT DE DÉTECTER DES ÉTATS DE LIAISON

(30) Priority: 31.10.2019 CN 201911055864
(43) Date of publication of application: 17.08.2022
(73) Proprietor: Huawei Technologies Co., Ltd., Longgang District Shenzhen, Guangdong 518129 (CN)
(72) Inventor: WANG, Lina, Shenzhen, Guangdong 518129 (CN); ZHANG, Yaokun, Shenzhen, Guangdong 518129 (CN)
(74) Representative: Maiwald GmbH
(86) International application number: PCT/CN2020/125670
(87) International publication number: WO 2021/083375

(56) References cited:
- EP-A1- 2 618 521
- CN-A- 101 227 416
- CN-A- 106 911 533
- CN-A- 107 736 004
- CN-A- 109 088 822
- US-A1- 2009 323 520
- US-A1- 2012 281 541
- 3RD GENERATION PARTNERSHIP PROJECT ET AL: "Network Management(NM) procedures and messages on the A-bis interface; (Release 1999)", 3GPP TS 12.21 V.8.0.0,, vol. 12.21, no. V8.0.0, 1 April 2002 (2002-04-01), pages 1 - 63, XP002514539
- "R GLOBAL SYSTEM FOR MOBILE COMMUNICATIONS Digital cellular telecommunications system; Base Station Controller - Base Transceiver Station (BSC - BTS) interface; Layer 2 specification (GSM 08.56); GSM 08.56", GSM TECHNICAL SPECIFICATION, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. SMG3, no. 5.0.0, 1 December 1996 (1996-12-01), XP014011709

## Description

### TECHNICAL FIELD

This application relates to the communications field, and in particular, to a method, an apparatus and a system for detecting a link status.

### BACKGROUND

In a communications network, two network devices are connected through a physical link, and the physical link may carry one or more logical links. Either of the two network devices includes a route module corresponding to each logical link. The route module corresponding to the logical link is configured to maintain routing information corresponding to the logical link.

The route module corresponding to the logical link may need to request the network device to establish a logical link detection module for the route module. The logical link detection module is configured to detect a link status of the logical link, and send the detected link status of the logical link to the route module. The route module receives the link status, and performs route convergence or rerouting processing when the link status is an abnormal state.

In a process of implementing this application, the prior art has the following disadvantages:

One physical link usually carries a plurality of logical links. In this case, the network device establishes a logical link detection module for a route module corresponding to each logical link. In other words, the network device runs a plurality of logical link detection modules, which occupies a large quantity of computing resources of the network device. When detecting a status of the logical link, each logical link detection module establishes a session between the two network devices, which also occupies a large quantity of network resources.
The article "Network Management (NM) procedures and messages on the A-bis interface" by the 3rd Generation Partnership Project (3GPP TS 12.21 V8.0.0, dated April 2002) discloses, inter alia, the handling of states of physical links.

### SUMMARY

This application provides a method and apparatus for detecting a link status, so as to reduce occupied computing resources of a network device and occupied network resources of a communications network. The invention is set out in the appended set of claims. The technical solutions are as follows:

According to a first aspect, this application provides a method for detecting a link status. In the method, a first network device detects a link status of a bundled physical link, and the bundled physical link is a link between the first network device and a second network device. The first network device determines, based on link information about the bundled physical link, N logical links carried on the bundled physical link, where N is an integer greater than or equal to 1. The first network device skips detecting link statuses of the N logical links, and sets the link statuses of the N logical links to the link status of the bundled physical link. In this way, the link statuses of the N logical links may be obtained by detecting only a link status of one bundled physical link, and the link status of each of the N logical links does not need to be detected. Therefore, occupied computing resources of a network device and occupied network resources of a communications network are reduced.

In a possible implementation, the first network device determines, based on the link information about the bundled physical link, M first logical interfaces located on a first bundled physical interface, where M is an integer greater than or equal to N, and the first bundled physical interface is an interface that is on the first network device and connected to the bundled physical link. The first network device selects the N logical links from M logical links connected to the M first logical interfaces. The N logical links carried on the bundled physical link are determined.

In another possible implementation, the first network device determines, based on the link information about the bundled physical link, the M first logical interfaces that are located on the first bundled physical interface and have addresses.

In another possible implementation, the first network device obtains link information about the M logical links. The first network device determines, based on the link information about the M logical links and the link information about the bundled physical link, N second logical interfaces located on a second bundled physical interface, where the second bundled physical interface is an interface that is on the second network device and connected to the bundled physical link. The first network device selects a logical link connected to the N second logical interfaces. When the first network device is connected to the second network device by using another network device, there is at least one logical link connected to the first logical interface, and one logical link is carried on the bundled physical link. Therefore, the N second logical interfaces located on the second bundled physical interface are determined. In addition, because the second bundled physical interface is a bundled physical interface that is on the second network device and connected to the bundled physical link, logical links connected to the N second logical interfaces are logical links carried on the bundled physical link. This improves accuracy of determining the logical link located on the bundled physical link.

In another possible implementation, the first network device calculates, based on the link status of each of the N logical links, a route corresponding to each logical link. The link status of each logical link is the link status of the bundled physical link. Therefore, the route of each logical link may be calculated based on the link status of the bundled physical link, and the link status of each logical link does not need to be detected.

According to the first aspect, the first network device sends a diagnosis packet to the second network device. The diagnosis packet includes a detection indication, and the detection indication is used to indicate the second network device to detect the link status of the bundled physical link and set the link statuses of the N logical links to the link status of the bundled physical link. In this way, the second network device may obtain the link statuses of the N logical links by detecting only a link status of one bundled physical link, and the link status of each of the N logical links does not need to be detected. Therefore, the occupied computing resources of the network device and the occupied network resources of the communications network are reduced.

In another possible implementation, a demand field of the diagnosis packet includes the detection indication.

According to a second aspect, this application provides an apparatus for detecting a link status, configured to perform the method in any one of the first aspect or the possible implementations of the first aspect. Specifically, the apparatus includes units configured to perform the method in any one of the first aspect or the possible implementations of the first aspect.

According to a third aspect, this application provides an apparatus for detecting a link status. The apparatus includes a processor, a memory, and a transceiver. The processor, the memory, and the transceiver may be connected by using a bus system. The memory is configured to store one or more programs, and the processor is configured to execute the one or more programs in the memory, so that the apparatus completes the method in any one of the first aspect or the possible implementations of the first aspect.

According to a fourth aspect, this application provides a computer-readable storage medium. The computer-readable storage medium stores program code. When the program code is run on a computer, the computer is enabled to perform the method in any one of the first aspect or the possible implementations of the first aspect.

According to a fifth aspect, this application provides a computer program product including program code. When the computer program product runs on a computer, the computer is enabled to perform the method in any one of the first aspect or the possible implementations of the first aspect.

### BRIEF DESCRIPTION OF DRAWINGS

FIG. 1 is a schematic diagram of a network architecture according to an embodiment of this application;
FIG. 2 is a schematic diagram of a relationship between a bundled physical link and a member link according to an embodiment of this application;
FIG. 3 is a schematic diagram of another network architecture according to an embodiment of this application;
FIG. 4 is a flowchart of a method for detecting a link status useful for understanding this application;
FIG. 5 is a schematic diagram of a structure of a diagnosis packet according to an embodiment of this application;
FIG. 6 is a flowchart of another method for detecting a link status according to an embodiment of this application;
FIG. 7 is a schematic diagram of a structure of an apparatus for detecting a link status according to an embodiment of this application; and
FIG. 8 is a schematic diagram of a structure of another apparatus for detecting a link status according to an embodiment of this application.

### DESCRIPTION OF EMBODIMENTS

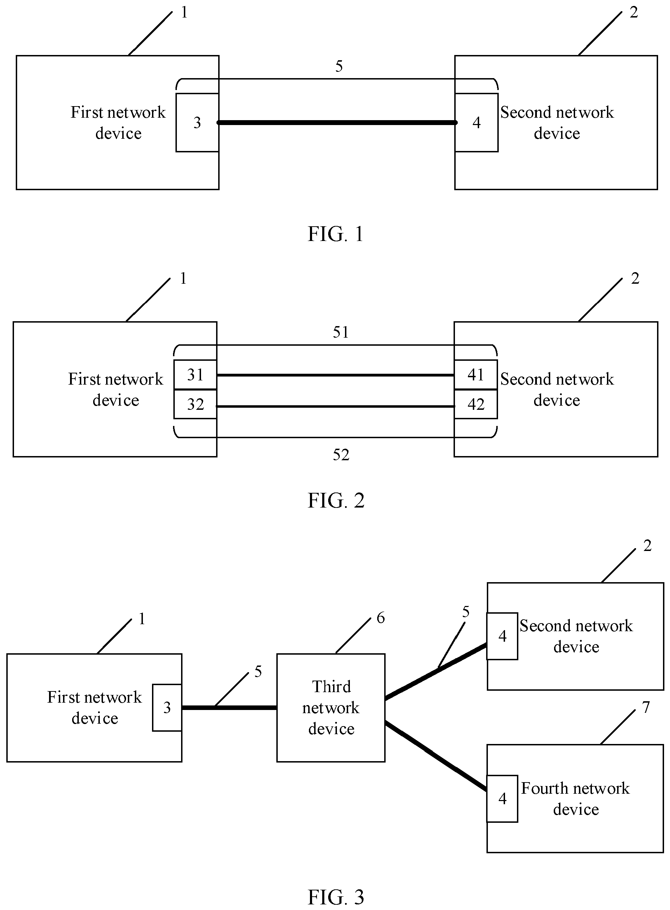

Refer to FIG. 1. An embodiment of this application provides a network architecture, including:
a first network device 1 and a second network device 2, where the first network device 1 includes at least one first bundled physical interface 3, the second network device 2 includes at least one second bundled physical interface 4, the first network device 1 and the second network device 2 may be connected through a bundled physical link 5, and the bundled physical link 5 is connected to one first bundled physical interface 3 on the first network device 1 and one second bundled physical interface 4 on the second network device 2.

The first bundled physical interface 3 includes at least one member interface, the second bundled physical interface 4 also includes at least one member interface, and the bundled physical link 5 includes at least one member link. For any member link, the member link is connected to one member interface in the first bundled physical interface 3 and one member interface in the second bundled physical interface 4.

For example, refer to FIG. 2. The first bundled physical interface 3 includes a first member interface 31 and a second member interface 32, and the second bundled physical interface 4 includes a third member interface 41 and a fourth member interface 42. The bundled physical link 5 includes a first member link 51 and a second member link 52. The first member link 51 is connected to the first member interface 31 and the third member interface 41. The second member link 52 is connected to the second member interface 32 and the fourth member interface 42.

Optionally, refer to FIG. 1. The first network device 1 and the second network device 2 may be directly connected, and communication between the first network device 1 and the second network device 2 does not need to be forwarded by another network device. Alternatively, refer to FIG. 3. The first network device 1 is connected to the second network device 2 by using at least one another network device, and communication between the first network device 1 and the second network device 2 is forwarded by using the at least one another network device. For example, refer to FIG. 3. The first bundled physical interface 3 of the first network device 1 is connected to the second network device 2 by using a third network device 6. The first network device 1 may further be connected to a network device other than the second network device 2 by using the third network device 6. For example, as shown in FIG. 3, the first network device 1 is further connected to a fourth network device 7.

Optionally, the first network device 1 may be a device such as a router or a switch. The second network device 2 may be a device such as a router or a switch. The third network device 6 may be a device such as a router or a switch. The fourth network device 7 may be a device such as a router or a switch. The first bundled physical interface 3 and the second bundled physical interface 4 may be an Ethernet interface, for example, may be an Ethernet-trunk (Ethernet-trunk, Eth-trunk) interface.

Optionally, the first network device 1 generates at least one first logical interface on the first bundled physical interface 3, and the second network device 2 generates at least one second logical interface on the second bundled physical interface 4. At least one logical link may be established between the first network device 1 and the second network device 2. Each logical link passes through one first logical interface on the first bundled physical interface 3 and one second logical interface on the second bundled physical interface 4, and the at least one logical link is carried on the bundled physical link 5.

For example, it is assumed that the first network device 1 generates two first logical interfaces on the first bundled physical interface 3, which are respectively a first logical interface A and a first logical interface B, and the second network device 2 generates two second logical interfaces on the second bundled physical interface 4, which are respectively a second logical interface C and a second logical interface D. In this way, a first logical link is established between the first logical interface A on the first bundled physical interface 3 and the second logical interface C on the second bundled physical interface 4, a second logical link is established between the first logical interface B on the first bundled physical interface 3 and the second logical interface D on the second bundled physical interface 4, and the first logical link and the second logical link are carried on the bundled physical link 5.

In the first network device 1, the first bundled physical interface 3 may have a first identifier of the first bundled physical interface 3, and each first logical interface on the first bundled physical interface 3 may have a first identifier of each first logical interface. The first network device 1 stores a correspondence between a first identifier of a bundled physical interface and a first identifier of a logical interface. To be specific, the first network device 1 correspondingly stores the first identifier of the first bundled physical interface 3 and the first identifier of each first logical interface on the first bundled physical interface 3 in the correspondence between the first identifier of the physical interface and the first identifier of the logical interface. For example, the first network device 1 may correspondingly store a first identifier IP1 of the first bundled physical interface 3, a first identifier IPA of the first logical interface A on the first bundled physical interface 3, and a first identifier IPB of the first logical interface B in the correspondence between the first identifier of the bundled physical interface and the first identifier of the logical interface shown in the following Table 1.

**Table 1**

| First identifier of a bundled physical interface | First identifier of a logical interface |
|---|---|
| IP1 | IPA, IPB |
| ... | ... |

Similarly, in the second network device 2, the second bundled physical interface 4 may have a first identifier of the second bundled physical interface 4, and each second logical interface on the second bundled physical interface 4 may have a first identifier of each second logical interface. The second network device 2 also stores the correspondence between the first identifier of the bundled physical interface and the first identifier of the logical interface. To be specific, the second network device 2 correspondingly stores the first identifier of the second bundled physical interface 4 and the first identifier of each first logical interface on the second bundled physical interface 4 in the correspondence between the first identifier of the bundled physical interface and the first identifier of the logical interface. For example, the second network device 2 may correspondingly store a first identifier IP2 of the second bundled physical interface 4, a first identifier IPC of the second logical interface C on the second bundled physical interface 4, and a first identifier IPD of the second logical interface D in the correspondence between the first identifier of the bundled physical interface and the first identifier of the logical interface shown in the following Table 2.

**Table 2**

| First identifier of a bundled physical interface | First identifier of a logical interface |
|---|---|
| IP2 | IPC, IPD |
| ... | ... |

Optionally, the first identifier is a protocol (internet protocol, IP) address for interconnecting networks, or the like.

In the first network device 1, the first bundled physical interface 3 may have a second identifier of the first bundled physical interface 3, and the first identifier of the first bundled physical interface 3 and the first identifier of each first logical interface on the first bundled physical interface 3 all correspond to the second identifier of the first bundled physical interface 3. In the second network device 2, the second bundled physical interface 4 may have a second identifier of the second bundled physical interface 4, and the first identifier of the second bundled physical interface 4 and the first identifier of each second logical interface on the second bundled physical interface 4 all correspond to the second identifier of the second bundled physical interface 4. The second identifier of the first bundled physical interface 3 is the same as a second identifier of each logical interface on the first bundled physical interface 3 (for example, with a same MAC address), and the second identifier of the second bundled physical interface 4 is the same as a second identifier of each second logical interface on the second bundled physical interface 4.

The first network device 1 stores a correspondence between a first identifier and a second identifier. The first network device 1 may obtain the first identifier of the second bundled physical interface 4 of the second network device 2, the first identifier of each second logical interface on the second bundled physical interface 4, and the second identifier of the second bundled physical interface 4, and correspondingly store the first identifier of the second bundled physical interface 4 of the second network device 2, the first identifier of each second logical interface on the second bundled physical interface 4, and the second identifier of the second bundled physical interface 4 in the correspondence between the first identifier and the second identifier. For example, the first network device 1 correspondingly stores the first identifier IP2 of the second bundled physical interface 4, the first identifier IPC of the second logical interface C on the second bundled physical interface 4, the first identifier IPD of the second logical interface D, and the second identifier MAC2 of the second bundled physical interface 4 in the correspondence between the first identifier and the second identifier shown in the following Table 3.

**Table 3**

| First identifier of an interface on a second network device | Second identifier of a second bundled physical interface on a second network device |
|---|---|
| IP2, IPC, IPD | MAC2 |
| ... | ... |

Similarly, the second network device 2 also stores the correspondence between the first identifier and the second identifier. The second network device 2 may obtain the first identifier of the first bundled physical interface 3 of the first network device 1, the first identifier of each first logical interface on the first bundled physical interface 3, and the second identifier of the first bundled physical interface 3, and correspondingly store the first identifier of the first bundled physical interface 3 of the first network device 1, the first identifier of each first logical interface on the first bundled physical interface 3, and the second identifier of the first bundled physical interface 3 in the correspondence between the first identifier and the second identifier. For example, the second network device 2 correspondingly stores the first identifier IP1 of the first bundled physical interface 3, the first identifier IPA of the second logical interface A on the first bundled physical interface 3, the first identifier IPB of the second logical interface B, and the second identifier MAC1 of the first bundled physical interface 3 in the correspondence between the first identifier and the second identifier shown in the following Table 4.

**Table 4**

| First identifier of an interface on a first network device | Second identifier of a second bundled physical interface on a first network device |
|---|---|
| IP1, IPA, IPB | MAC1 |
| ... | ... |

Optionally, the second identifier is a media access control (media access control, MAC) layer address, or the like.

The first network device 1 may include a first physical link detection module corresponding to the bundled physical link 5, and the second network device 2 may also include a second physical link detection module corresponding to the bundled physical link 5. For each logical link on the bundled physical link 5, the first network device 1 includes a first route module corresponding to each logical link, and the second network device 2 also includes a second route module corresponding to each logical link.

In the first network device 1, the first physical link detection module is configured to detect a link status of the bundled physical link 5. For a first route module corresponding to any logical link, the first route module is configured to maintain routing information of the logical link. The routing information may include at least one of a route target address, route next-hop information, an address of a route outbound interface, or a route priority. The routing information maintained by the first route module is generated by the first network device 1 based on the logical link. In the second network device 2, the second physical link detection module is configured to detect the link status of the bundled physical link 5. For a second route module corresponding to any logical link, the second route module is configured to maintain routing information of the logical link. The routing information maintained by the second route module is generated by the second network device 2 based on the logical link.

The first network device 1 includes a routing table, and the routing table includes routing information maintained by each first route module in the first network device 1. Each piece of routing information in the routing table corresponds to a logical link. Similarly, the second network device 2 also includes a routing table, and the routing table includes routing information maintained by each second route module in the second network device 2. Each piece of routing information in the routing table also corresponds to a logical link.

Optionally, a routing protocol used by the first route module or the second route module may be intermediate system to intermediate system (intermediate system to intermediate system, ISIS), open shortest path first (open shortest path first, OSPF), or the like.

Optionally, an operation of maintaining the routing information by the first route module may include: The first route module advertises the routing information to a neighbor of the first network device 1 by using the logical link corresponding to the routing information. The first route module updates a route priority included in the routing information. Alternatively, the first route module modifies one or more of route next-hop information included in the routing information. Similarly, an operation of maintaining the routing information by the second route module may also be one or more of the foregoing operations.

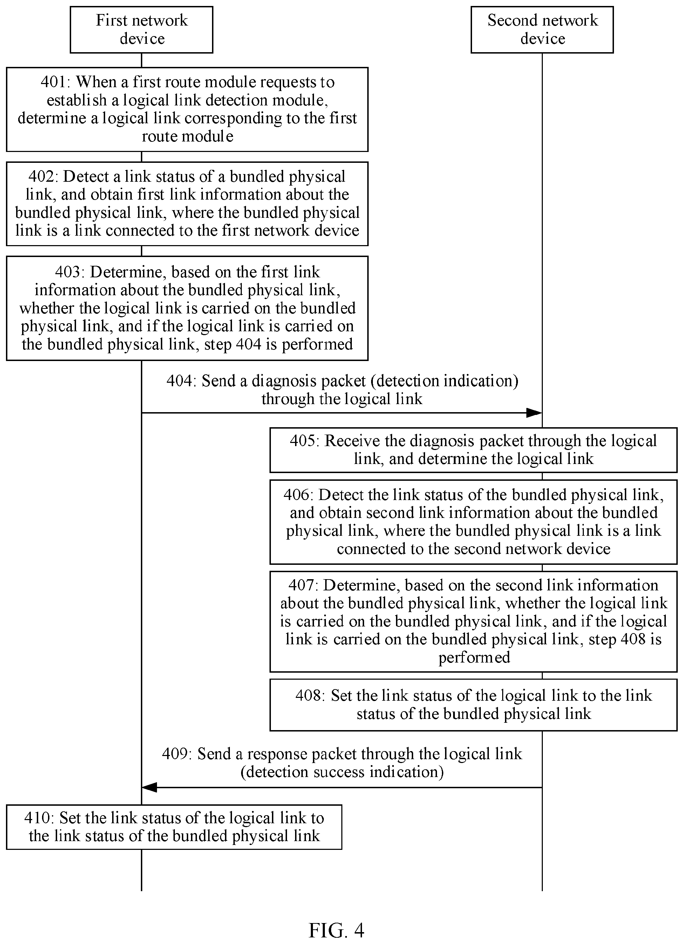

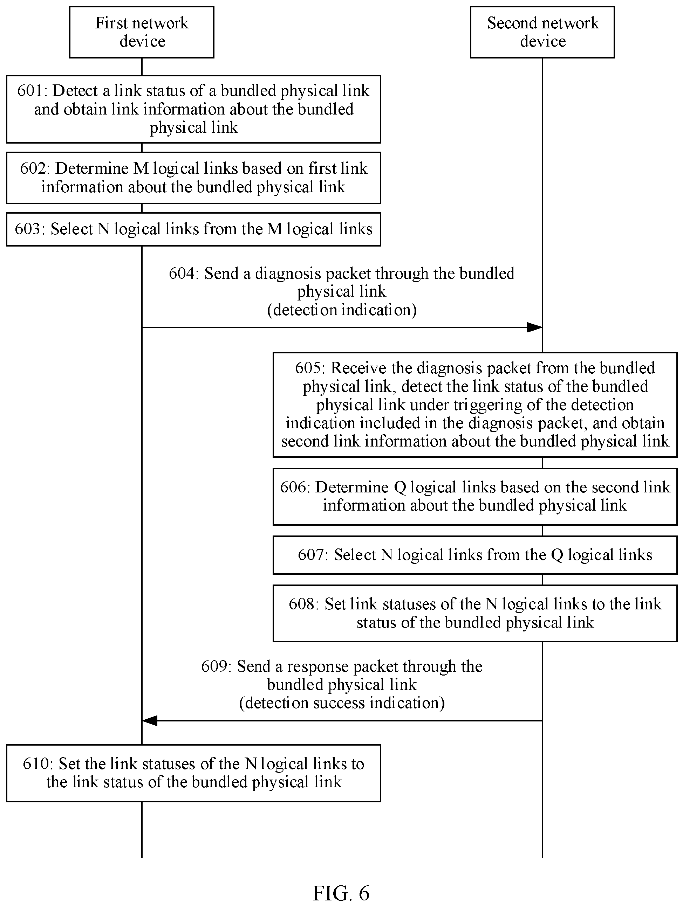

In the first network device 1, each first route module needs a link status of the logical link corresponding to the first route module. Therefore, a link status of each logical link connected to the first network device 1 needs to be obtained. To avoid detecting the link status of each logical link, logical links that are carried on the bundled physical link 5 connected to the first network device 1 may be determined, and link statuses of the logical links are set to the link status of the bundled physical link 5. In this way, the link statuses of the logical links carried on the bundled physical link 5 do not need to be detected. For a detailed process, refer to the embodiment shown in FIG. 4 or FIG. 6. Details are not described herein.

Similarly, in the second network device 2, each second route module needs a link status of the logical link corresponding to the second route module. Therefore, a link status of each logical link connected to the second network device 2 needs to be obtained. To avoid detecting the link status of each logical link, logical links that are carried on the bundled physical link 5 connected to the second network device 2 may be determined, and link statuses of the logical links are set to the link status of the bundled physical link 5. In this way, the link statuses of the logical links carried on the bundled physical link 5 do not need to be detected. For a detailed process, refer to the embodiment shown in FIG. 4 or FIG. 6. Details are not described herein.

Optionally, in the first network device 1, the first physical link detection module and each first route module are different processes or threads that run in the first network device 1. In the second network device 2, the second physical link detection module and each second route module are different processes or threads that run in the second network device 2.

Optionally, the first physical link detection module or the second physical link detection module may be a link bundle bidirectional forwarding detection (link bundle bidirectional forwarding detection, link bundle BFD).

Refer to FIG. 4. An embodiment of this application provides a method for detecting a link status. The method may be applied to any network architecture shown in FIG. 1 to FIG. 3, and includes the following steps.

Step 401: When a first route module requests to establish a logical link detection module, a first network device determines a logical link corresponding to the first route module.

For any first route module in the first network device, when the first route module requires a link status of a logical link corresponding to the first route module, the first route module may trigger a request command to the first network device, to request the first network device to establish the logical link detection module for the first network device. The logical link is a logical link between the first network device and a second network device.

The request command triggered by the first route module includes first link information about the logical link, the first link information includes a first identifier of a first logical interface connected to the logical link, and the first logical interface is an interface on the first network device. The first link information may further include a first identifier of a second logical interface connected to the logical link, and the second logical interface is an interface on the second network device.

In this step, the first network device may obtain the first link information from the request command, and determine the logical link based on the first link information.

Optionally, when no other network device exists between the first network device and the second network device, the first network device is directly connected to the second network device, and the first link information obtained by the first network device includes the first identifier of the first logical interface. The first link information obtained by the first network device may include the first identifier of the second logical interface, or may not include the first identifier of the second logical interface. A reason for this is as follows:

In this case, a first bundled physical interface of the first network device is connected to one second network device. In the first network device, each first logical interface on the first bundled physical interface may be connected to one logical link, and the logical link is a logical link between the first network device and the second network device. The logical link may be determined by using the first identifier of the first logical interface located on the first network device. Therefore, the first link information obtained by the first network device may include the first identifier of the first logical interface.

Optionally, when another network device exists between the first network device and the second network device, in other words, communication between the first network device and the second network device is forwarded by the another network device, the first link information obtained by the first network device includes the first identifier of the first logical interface and the first identifier of the second logical interface. A reason for this is as follows:

In this case, the first bundled physical interface of the first network device is connected to at least one second network device by using the another network device. In the first network device, each first logical interface on the first bundled physical interface is connected to at least one logical link, and the at least one logical link is a logical link between the first network device and the at least one second network device. In this case, the logical link needs to be determined by using the first identifier of the first logical interface located on the first network device and the first identifier of the second logical interface located on the second network device. Therefore, the first link information obtained by the first network device may include the first identifier of the first logical interface and the first identifier of the second logical interface.

Step 402: The first network device detects a link status of a bundled physical link, and obtains first link information about the bundled physical link, where the bundled physical link is a link connected to the first network device.

The first link information about the bundled physical link includes at least a first identifier of the first bundled physical interface connected to the bundled physical link, and the first bundled physical interface is located on the first network device. Optionally, the first link information about the bundled physical link further includes a first identifier of a second bundled physical interface connected to the bundled physical link, and the second bundled physical interface is located on the second network device.

The first network device may include at least one first physical link detection module. The first physical link detection module includes the first link information about the bundled physical link corresponding to the first physical link detection module.

In this step, the first network device selects one first physical link detection module from first physical link detection modules included in the first network device. The first network device determines the bundled physical link corresponding to the selected first physical link detection module, detects the link status of the bundled physical link by using the selected first physical link detection module, and obtains the first link information about the bundled physical link from the selected first physical link detection module.

The first link information obtained by the first network device includes the first identifier of the first bundled physical interface connected to the bundled physical link. The first link information may further include the first identifier of the second bundled physical interface connected to the bundled physical link, and the second bundled physical interface is an interface on the second network device.

Optionally, when no other network device exists between the first network device and the second network device, the first network device is directly connected to the second network device, and the first link information obtained by the first network device includes the first identifier of the first bundled physical interface. The first link information obtained by the first network device may include the first identifier of the second bundled physical interface, or may not include the first identifier of the second bundled physical interface. A reason for this is as follows:

In this case, the first bundled physical interface of the first network device is connected to one second network device. In the first network device, the first bundled physical interface may be connected to a bundled physical link, and the bundled physical link is a bundled physical link between the first network device and the second network device. The bundled physical link may be determined by using the first identifier of the first bundled physical interface located on the first network device. Therefore, the first link information obtained by the first network device may include the first identifier of the first bundled physical interface.

Optionally, when the another network device exists between the first network device and the second network device, in other words, the communication between the first network device and the second network device is forwarded by the another network device, the first link information obtained by the first network device includes the first identifier of the first bundled physical interface and the first identifier of the second bundled physical interface. A reason for this is as follows:

In this case, the first bundled physical interface of the first network device is connected to the at least one second network device by using the another network device. In the first network device, each first bundled physical interface on the first bundled physical interface is connected to at least one bundled physical link, and the at least one bundled physical link is a bundled physical link between the first network device and the at least one second network device. In this case, the bundled physical link needs to be determined by using the first identifier of the first bundled physical interface located on the first network device and the first identifier of the second bundled physical interface located on the second network device. Therefore, the first link information obtained by the first network device may include the first identifier of the first bundled physical interface and the first identifier of the second bundled physical interface.

Step 403: The first network device determines, based on the first link information about the bundled physical link, whether the logical link is carried on the bundled physical link, and if the logical link is carried on the bundled physical link, step 404 is performed.

In this step, the first network device obtains, based on the first identifier of the first bundled physical interface, first identifiers of first logical interfaces located on the first bundled physical interface from a correspondence between a first identifier of a logical interface and a first identifier of a bundled physical interface, and further determines, based on the first identifiers of the first logical interfaces, the first logical interfaces located on the first bundled physical interface. If the first logical interfaces include the first logical interface connected to the logical link, it is determined that the logical link is carried on the bundled physical link. If the first logical interfaces do not include the first logical interface connected to the logical link, it is determined that the logical link is not carried on the bundled physical link.

Optionally, when the first link information about the bundled physical link further includes the first identifier of the second bundled physical interface, and the first link information about the logical link further includes the first identifier of the second logical interface, during implementation, after determining that the first logical interfaces located on the first bundled physical interface include the first logical interface connected to the logical link, the first network device further determines, based on the first link information about the bundled physical link and the first link information about the logical link, whether a second link interface connected to the logical link is located on the second bundled physical interface connected to the bundled physical link. If the second logical interface is located on the second bundled physical interface, it is determined that the logical link is carried on the bundled physical link.

During implementation, the first network device obtains a second identifier of the second bundled physical interface from a correspondence between the first identifier and the second identifier based on the first identifier of the second bundled physical interface, and obtains, based on the first identifier of the second logical interface connected to the logical link, a second identifier of a bundled physical interface corresponding to the second logical interface from the correspondence between the first identifier and the second identifier. It is determined whether the second identifier of the second bundled physical interface is the same as the second identifier of the bundled physical interface corresponding to the second logical interface. If the second identifiers are the same, it is determined that the second logical interface is located on the second bundled physical interface, and it is further determined that the logical link is carried on the bundled physical link. If the second identifiers are different, it is determined that the logical link is not carried on the bundled physical link.

In this step, if it is determined that the logical link is not carried on the bundled physical link, the second network device selects a first physical link detection module from unselected first physical link detection modules included in the second network device, and then performs operations in steps 402 and 403 again. If no bundled physical link carrying the logical link is determined even after all the first physical link detection modules in the second network device are selected, it indicates that no first physical link detection module configured to detect the bundled physical link corresponding to the logical link is in the first network device. Therefore, the first network device may establish a logical link detection module for the first route module. The logical link detection module is configured to detect the link status of the logical link.

In this step, if it is determined that the logical link is carried on the bundled physical link, the first network device obtains the link status of the bundled physical link detected by the first physical link detection module, and performs the following operation in step 404 when the link status is a normal state. When the link status is an abnormal state, the first network device may establish the logical link detection module for the first route module.

Step 404: The first network device sends a diagnosis packet to the second network device through the logical link, where the diagnosis packet includes a detection indication.

The detection indication is used to indicate the second network device to set the link status of the logical link to the link status of the bundled physical link.

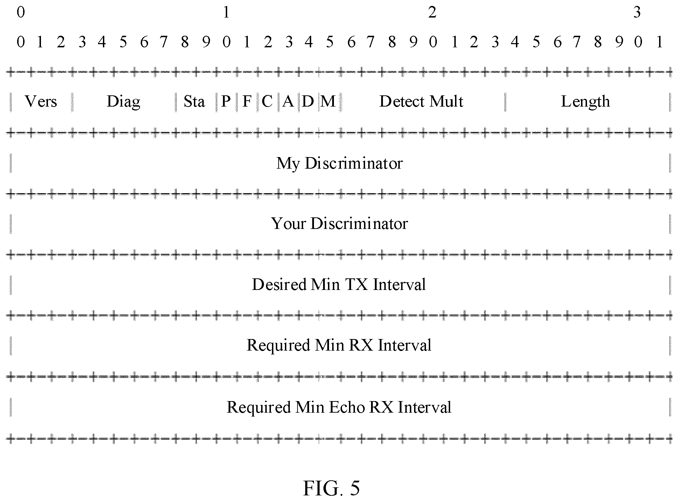

Optionally, refer to a structure of a diagnosis packet shown in FIG. 5. The diagnosis packet includes the following fields: version (version, Vers), diagnostic (diagnostic, Diag), status (status, Sta), poll (poll, P), final (final, F), control plane independent (control plane independent, C), authentication present (authentication present, A), demand (demand, D), Detect Mult (Detect Mult), multipoint (multipoint, M), length (Length), My Discriminator (My Discriminator), Your Discriminator (Your Discriminator), Desired Min TX Interval (Desired Min TX Interval), Required Min RX Interval (Required Min RX Interval), and Required Min Echo RX Interval (Required Min Echo RX Interval).

The diagnosis packet includes a demand field (D in FIG. 5 indicates the demand field). The demand field includes a detection indication. The demand field may indicate 32 values, and the 32 values are respectively 0, 1, 2, ..., and 31, where 9 to 31 are reserved values. In this step, one value from the values 9 to 31 may be selected as a binding indication.

For example, the first network device sends the diagnosis packet to the second network device through a first logical link. The diagnosis packet includes the detection indication.

Step 405: The second network device receives the diagnosis packet from the logical link, and determines the logical link under triggering of the detection indication included in the diagnosis packet.

In this step, the second network device may further determine a second route module corresponding to the logical link, and obtain second link information about the logical link from the second route module. The second link information may include the first identifier of the second logical interface connected to the logical link, and may further include the first identifier of the first logical interface connected to the logical link.

Step 406: The second network device detects the link status of the bundled physical link, and obtains second link information about the bundled physical link, where the bundled physical link is a link connected to the second network device.

The second link information includes at least the first identifier of the second bundled physical interface connected to the bundled physical link.

The second network device may include at least one second physical link detection module. In this step, the second network device selects one second physical link detection module from second physical link detection modules included in the second network device. The second network device determines the bundled physical link corresponding to the selected second physical link detection module, detects the link status of the bundled physical link by using the selected second physical link detection module, and obtains, from the selected second physical link detection module, the second link information about the bundled physical link corresponding to the second physical link detection module. The second link information includes the first identifier of the second bundled physical interface connected to the bundled physical link. The second link information may further include the first identifier of the first bundled physical interface connected to the bundled physical link.

Step 407: The second network device determines, based on the second link information about the bundled physical link, whether the logical link is carried on the bundled physical link, and if the logical link is carried on the bundled physical link, step 408 is performed.

In this step, the second network device obtains, based on the first identifier of the second bundled physical interface, first identifiers of second logical interfaces located on the second bundled physical interface from the correspondence between the first identifier of the logical interface and the first identifier of the bundled physical interface, and determines, based on the first identifiers of the second logical interfaces, the second logical interfaces located on the second bundled physical interface. The second network device determines whether the second logical interfaces located on the second bundled physical interface include the second logical interface connected to the logical link, and if yes, it is determined that the logical link is not carried on the bundled physical link.

Optionally, when the second link information about the bundled physical link further includes the first identifier of the first bundled physical interface, and the second link information about the logical link further includes the first identifier of the first logical interface, after the second network device determines that the second logical interfaces located on the second bundled physical interface include the second logical interface connected to the logical link, the second network device further determines, based on the second link information about the bundled physical link and the second link information about the logical link, whether a first link interface connected to the logical link is located on the first bundled physical interface connected to the bundled physical link. If the first logical interface is located on the first bundled physical interface, it is determined that the logical link is carried on the bundled physical link.

During implementation, the second network device obtains a second identifier of the first bundled physical interface from the correspondence between the first identifier and the second identifier based on the first identifier of the first bundled physical interface, and obtains, based on the first identifier of the first logical interface connected to the logical link, a second identifier of a bundled physical interface corresponding to the first logical interface from the correspondence between the first identifier and the second identifier. It is determined whether the second identifier of the first bundled physical interface is the same as the second identifier of the bundled physical interface corresponding to the first logical interface. If the second identifiers are the same, it is determined that the first logical interface is located on the first bundled physical interface, and it is further determined that the logical link is carried on the bundled physical link. If the second identifiers are different, it is determined that the logical link is not carried on the bundled physical link.

In this step, if it is determined that the logical link is not carried on the bundled physical link, the second network device selects a second physical link detection module from unselected second physical link detection modules included in the second network device, and then performs operations in steps 406 and 407 again.

Step 408: The second network device sets the link status of the logical link to the link status of the bundled physical link.

In this step, the second network device may input the link status of the logical link to the second route module.

Optionally, the second network device may further record an identifier of the second route module in the second physical link detection module, so as to bind the second physical link detection module to the second route module. In this way, when the second route module requests the link status of the logical link corresponding to the second route module, when detecting the link status of the bundled physical link by using the second physical link detection module, the second network device sets the link status of the logical link to the link status of the bundled physical link, and inputs the link status of the bundled physical link to the second route module based on the recorded identifier of the second route module. In this way, the second route module calculates a route corresponding to the logical link based on the link status.

Step 409: The second network device sends a response packet to the first network device through the logical link, where the response packet includes a detection success indication.

Optionally, the diagnosis packet is used as the response packet, and the demand field included in the diagnosis packet carries the detection success indication. Optionally, a value is selected from the values 9 to 31 as the detection success indication. The detection success indication and the detection indication may be a same value or different values.

Step 410: The first network device receives the response packet, and sets the link status of the logical link to the link status of the bundled physical link under triggering of a binding success indication included in the response packet.

In this step, after the first network device sets the link status of the logical link to the link status of the bundled physical link, the first network device may input the link status to the second route module.

Optionally, the first network device may further record an identifier of the first route module in the first physical link detection module, so as to bind the first physical link detection module to the first route module. In this way, when the first route module requests the link status of the logical link corresponding to the first route module again, when detecting the link status of the bundled physical link by using the first physical link detection module, the first network device sets the link status of the logical link to the link status of the bundled physical link, and sends the link status of the bundled physical link to the first route module based on the recorded identifier of the first route module. In this way, the first route module calculates a route corresponding to the logical link based on the link status.

Optionally, the bundled physical link includes at least one member link, and the at least one member link carries the logical link. The second physical link detection module is configured to detect a link status of each member link, and obtain the link status of the bundled physical link based on the link status of each member link. Optionally, when the link status of each member link is an abnormal state, it is obtained that the link status of the bundled physical link is an abnormal state; otherwise, it is obtained that the link status of the bundled physical link is a normal state.

For any member link, when detecting a link status of the member link, the first physical link detection module sends a first packet to the second physical link detection module through the member link, and after receiving the first packet, the second physical link detection module sends a second packet to the first physical link detection module through the member link. When receiving the second packet on the member link within first duration after the first packet is sent, the first physical link detection module determines that the link status of the member link is the normal state. When no second packet is received on the member link within the first duration after the first packet is sent, the first physical link detection module determines that the link status of the member link is the abnormal state.

The first bundled physical interface in the first network device includes at least one member interface. If the logical link detection module is used to detect the bundled physical link and the logical link detection module is used to provide a link status for the first route module, the logical link detection module deploys a state machine on a board on which the member interface of the first bundled physical interface is located, and the state machine may detect a member link corresponding to the member interface. When the state machine is abnormal, the logical link detection module detects that a status of the bundled physical link is the abnormal state, and the status of the bundled physical link provided to the first route module is the abnormal state. An exception of the state machine may be caused by an exception of the board on which the state machine is located, and only indicating that the member link may be abnormal. However, a board on which another member interface is located may still be normal, that is, another member link in the bundled physical link may be normal. The first network device may still communicate with the second network device through the bundled physical link, and the status of the bundled physical link is still the normal state. Therefore, when the logical link detection module is used to provide the link status for the first route module, an incorrect link status may be provided.

However, the first physical link detection module detects each member link included in the bundled physical link, in other words, the first physical link detection module deploys a state machine on a board on which each member interface included in the first bundled physical interface is located. Each member interface and each member link may be detected by using the state machine on each board, and only when all state machines are abnormal, it is determined that the bundled physical link is abnormal. In this way, an accurate link status of the bundled physical link may be provided for the first route module.

In this embodiment of this application, when the first route module of the first network device requests to establish the logical link detection module, the first network device determines the logical link corresponding to the first route module, and obtains the first link information about the bundled physical link connected to the first network device. Based on the first link information about the bundled physical link, it is determined whether the logical link is carried on the bundled physical link. When the logical link is carried on the bundled physical link, the link status of the bundled physical link is detected, the link status of the logical link is set to the link status of the bundled physical link and is provided to the first route module corresponding to the logical link. In this way, when first route modules corresponding to logical links carried on the bundled physical link request to establish the logical link detection module, link statuses of the logical links may be set to the link status of the bundled physical link, and the detected link status is provided to the first route modules. In this way, the logical link detection module does not need to be established for each first route module. This reduces occupied computing resources of a network device and reduces occupied network resources.

Refer to FIG. 6. An embodiment of this application provides a method for detecting a link status. The method may be applied to any network architecture shown in FIG. 1 to FIG. 3, and includes the following steps.

Step 601: A first network device detects a link status of a bundled physical link and obtains first link information about the bundled physical link. The first link information includes at least a first identifier of a first bundled physical interface connected to the bundled physical link, and the first bundled physical interface is an interface on the first network device.

Optionally, the first link information may further include a first identifier of a second bundled physical interface connected to the bundled physical link, and the second bundled physical interface is an interface on a second network device.

Optionally, in this step, when establishing a first physical link detection module, the first network device determines the bundled physical link corresponding to the first physical link detection module, detects the link status of the bundled physical link by using the first physical link detection module, and obtains, from the first physical link detection module, the first link information corresponding to the bundled physical link.

When the link status of the bundled physical link between the first network device and the second network device needs to be detected, a person skilled in the art may enter configuration information to the first network device by using a management device. The configuration information includes the first identifier of the first bundled physical interface connected to the bundled physical link on the first network device and the first identifier of the second bundled physical interface connected to the bundled physical link on the second network device. The first network device generates, by using the first identifier of the first bundled physical interface as a source identifier and the first identifier of the second bundled physical interface as a destination identifier, the first physical link detection module configured to detect the bundled physical link.

Similarly, the person skilled in the art may further enter the configuration information to the second network device by using the management device. The configuration information includes the first identifier of the first bundled physical interface connected to the bundled physical link on the first network device and the first identifier of the second bundled physical interface connected to the bundled physical link on the second network device. The second network device generates, by using the first identifier of the second bundled physical interface as a source identifier and the first identifier of the first bundled physical interface as a destination identifier, a second physical link detection module configured to detect the bundled physical link.

Optionally, when the first identifier is an address, the first bundled physical interface in the first network device may also have no first identifier of the first bundled physical interface. In this way, the configuration information configured by the person skilled in the art on the first network device does not include the first identifier of the first bundled physical interface, but includes number information about the first bundled physical interface. In this way, when generating the first physical link detection module, the first network device may select a first identifier from first identifiers of first logical interfaces on the first bundled physical interface, set the first identifier of the first bundled physical interface as the selected first identifier, and then generate, by using the first identifier of the first bundled physical interface as the source identifier and the first identifier of the second bundled physical interface as the destination identifier, the first physical link detection module configured to detect the bundled physical link.

Optionally, in the first network device, each first logical interface on the first bundled physical interface has number information about each first logical interface, and the first network device may sort each first logical interface based on the number information about each first logical interface, and select a first identifier of a first logical interface with largest number information, or select a first identifier of a first logical interface with smallest number information. Alternatively, the first network device randomly selects a first identifier of a first logical interface from each first logical interface.

Similarly, when the first identifier is an address, the second bundled physical interface in the second network device may also have no first identifier of the second bundled physical interface, and the configuration information configured by the person skilled in the art on the second network device may not include the first identifier of the first bundled physical interface, but includes number information about the first bundled physical interface. When generating the first physical link detection module, the second network device may select a first identifier from first identifiers of second logical interfaces on the second bundled physical interface, set the first identifier of the second bundled physical interface as the selected first identifier, and then generate, by using the first identifier of the second bundled physical interface as the source identifier and the first identifier of the first bundled physical interface as the destination identifier, the second physical link detection module configured to detect the bundled physical link.

If the person skilled in the art hope that the first network device binds the first physical link detection module and a first route module corresponding to each logical link carried on the bundled physical link, the configuration information may further include binding command information.

In this step, when the configuration information includes the binding command information, after generating the first physical link detection module, the first network device obtains, under triggering of the binding command information, link information about the bundled physical link corresponding to the first physical link detection module.

The first physical link detection module may include the link information about the bundled physical link corresponding to the first physical link detection module. Therefore, the first network device may obtain, from the first physical link detection module, the link information about the bundled physical link corresponding to the first physical link detection module, or obtain, from the configuration information, the link information about the bundled physical link corresponding to the first physical link detection module.

In this step, if the first physical link detection module that already exists in the first network device needs to be bound to the first route module, the person skilled in the art may enter the binding command information to the first network device by using the management device. The binding command information includes an identifier of the first physical link detection module. The first network device determines the first physical link detection module based on the identifier of the first physical link detection module in the binding command information, obtains, according to the method in this embodiment of this application, the link information about the bundled physical link corresponding to the first physical link detection module, and continues to perform subsequent steps in this embodiment of this application.

Step 602: The first network device determines M logical links based on the first link information about the bundled physical link, where M is an integer greater than or equal to 1.

When the first network device is directly connected to the second network device, the first link information about the bundled physical link includes the first identifier of the first bundled physical interface. When the first network device is connected to the second network device by using another network device, the first link information about the bundled physical link may further include the first identifier of the second bundled physical interface. The second bundled physical interface is an interface that is on the second network device and connected to the bundled physical link.

In this step, the first network device determines, based on the first identifier of the first bundled physical interface, M first logical interfaces that are located on the first bundled physical interface and have addresses, and determines logical links connected to the M first logical interfaces, that is, obtains M logical links.

The first network device may obtain, based on the first identifier of the first bundled physical interface, the first identifiers of the first logical interfaces located on the first bundled physical interface from a correspondence between a first identifier of a bundled physical interface and a first identifier of a logical interface; determine, based on the first identifiers of the first logical interfaces located on the first bundled physical interface, first link interfaces located on the first bundled physical interface; select the M first logical interfaces having an address from the first logical interfaces located on the first bundled physical interface; and determine the logical links connected to the M first logical interfaces, that is, obtain the M logical links.

Step 603: The first network device selects N logical links from the M logical links, where the N logical links are carried on the bundled physical link, and N is an integer less than or equal to M and greater than or equal to 1.

Optionally, when the first network device is directly connected to the second network device, each first logical interface located on the first bundled physical interface is connected to a logical link, and the logical link is a link between the first network device and the second network device. In this case, M is equal to N, and the N logical links are directly selected.

Optionally, when the first network device is connected to the second network device by using the another network device, for each first logical interface located on the first bundled physical interface, at least one logical link connected to the first logical interface is included, and one logical link in the at least one logical link is the link between the first network device and the second network device. In this case, an operation of selecting N logical links from the M logical links may include the following operations 6031 and 6032. The operations 6031 and 6032 are as follows.

6031: Obtain first link information about the M logical links.

A first route module corresponding to each of the M logical links is determined, to obtain M first route modules, and any first route module includes first link information about a logical link corresponding to any first route module. First link information about the M logical links is obtained from the M first route modules. The first link information about each logical link includes the first identifier of the second logical interface, and the second logical interface may be an interface on the second network device.

6032: Determine, based on the first link information about the M logical links and the first link information about the bundled physical link, N second logical interfaces located on the second bundled physical interface. The second bundled physical interface is an interface that is on the second network device and connected to the bundled physical link.

The first link information about the bundled physical link includes the first identifier of the second bundled physical interface. In this step, a second identifier of the second bundled physical interface is obtained from a correspondence between a first identifier and a second identifier based on the first identifier of the second bundled physical interface. For the first identifier of the second logical interface included in the first link information about any logical link, a second identifier of a bundled physical interface corresponding to the second logical interface is obtained from the correspondence between the first identifier and the second identifier based on the first identifier of the second logical interface. When the second identifier of the second bundled physical interface is the same as the second identifier of the bundled physical interface corresponding to the second logical interface, it is determined that the second logical interface is located on the second bundled interface.

6033: Select a logical link connected to the N second logical interfaces.

The second bundled physical interface is an interface that is on the second network device and connected to the bundled physical link, and the N second logical interfaces are located on the second bundled physical interface. Therefore, it is determined that the logical link connected to the N second logical interfaces is located on the bundled physical link.

In this step, the first network device determines first route modules corresponding to the N logical links carried on the bundled physical link, that is, obtains N first route modules.

In this step, after obtaining the N first route modules, the first network device obtains the link status of the bundled physical link detected by the first physical link detection module, and performs the following operation in step 604 when the link status is a normal state. When the link status is an abnormal state, no further action is required.

Step 604: The first network device sends a diagnosis packet to the second network device through the bundled physical link, where the diagnosis packet includes a detection indication.

The detection indication is used to indicate the second network device to set link statuses of the N logical links carried on the bundled physical link to the link status of the bundled physical link.

Optionally, a demand field of the diagnosis packet includes the detection indication.

The second network device includes the second physical link detection module configured to detect the bundled physical link and a second route module corresponding to each of the N logical links.

Step 605: The second network device receives the diagnosis packet from the bundled physical link, detects the link status of the bundled physical link under triggering of the detection indication included in the diagnosis packet, and obtains second link information about the bundled physical link.

In this step, the second network device receives the diagnosis packet from the bundled physical link, determines the second physical link detection module corresponding to the bundled physical link under triggering of the detection indication included in the diagnosis packet, detects the link status of the bundled physical link by using the second physical link detection module, and obtains the second link information about the bundled physical link from the second physical link detection module. The second link information may include the first identifier of the second bundled physical interface through which the bundled physical link passes, and may further include the first identifier of the first bundled physical interface through which the bundled physical link passes.

Step 606: The second network device determines Q logical links based on the second link information about the bundled physical link, where Q is an integer greater than or equal to 1.

When the first network device is directly connected to the second network device, the second link information about the bundled physical link includes the first identifier of the second bundled physical interface. When the first network device is connected to the second network device by using another network device, the second link information about the bundled physical link may further include the first identifier of the first bundled physical interface. The first bundled physical interface is an interface that is on the first network device and connected to the bundled physical link.

In this step, the second network device determines, based on the first identifier of the second bundled physical interface, Q second logical interfaces that are located on the second bundled physical interface and have addresses, and determines logical links connected to the Q second logical interfaces, that is, obtains Q logical links.

The second network device may obtain, based on the first identifier of the second bundled physical interface, first identifiers of second link interfaces located on the second bundled physical interface from the correspondence between the first identifier of the bundled physical interface and the first identifier of the logical interface; determine, based on the first identifiers of the second link interfaces located on the second bundled physical interface, the second link interfaces located on the second bundled physical interface; select the Q second logical interfaces having an address from the second logical interfaces located on the second bundled physical interface; and determine the logical links connected to the Q second logical interfaces, that is, obtain the Q logical links.

Step 607: The second network device selects N logical links from the Q logical links, where the N logical links are carried on the bundled physical link, and N is an integer less than or equal to Q and greater than or equal to 1.

Optionally, when the second network device is directly connected to the first network device, each second logical interface located on the second bundled physical interface is connected to a logical link, and the logical link is a link between the first network device and the second network device. In this case, Q is equal to N, and the N logical links are directly selected.

Optionally, when the second network device is connected to the first network device by using the another network device, for each second logical interface located on the second bundled physical interface, at least one logical link connected to the second logical interface is included, and one logical link in the at least one logical link is the link between the second network device and the first network device. In this case, an operation of selecting N logical links from the Q logical links may include the following operations 6071 and 6072. The operations 6071 and 6072 are as follows.

6071: Obtain second link information about the Q logical links.

A second route module corresponding to each of the Q logical links is determined, to obtain Q second route modules, and any second route module includes second link information about a logical link corresponding to any second route module. Second link information about the Q logical links is obtained from the Q second route modules. The second link information about each logical link includes the first identifier of the first logical interface, and the first logical interface may be an interface on the first network device.

6072: Determine, based on the second link information about the Q logical links and the second link information about the bundled physical link, N first logical interfaces located on the first bundled physical interface. The first bundled physical interface is an interface that is on the first network device and connected to the bundled physical link.

The second link information about the bundled physical link includes the first identifier of the first bundled physical interface. In this step, a second identifier of the first bundled physical interface is obtained from the correspondence between the first identifier and the second identifier based on the first identifier of the first bundled physical interface. For the first identifier of the first logical interface included in the second link information about any logical link, a second identifier of a bundled physical interface corresponding to the first logical interface is obtained from the correspondence between the first identifier and the second identifier based on the first identifier of the first logical interface. When the second identifier of the first bundled physical interface is the same as the second identifier of the bundled physical interface corresponding to the first logical interface, it is determined that the first logical interface is located on the first bundled physical interface.

6073: Select a logical link connected to the N first logical interfaces.

The first bundled physical interface is an interface that is on the first network device and connected to the bundled physical link, and the N first logical interfaces are located on the first bundled physical interface. Therefore, it is determined that the logical link connected to the N first logical interfaces is located on the bundled physical link.

For each logical link between the first network device and the second network device, the logical link has a corresponding first route module in the first network device and a corresponding second route module in the second network device. Therefore, first route modules corresponding to the N logical links carried on the bundled physical link exist in the first network device, and first route modules corresponding to the N logical links also exist in the second network device.

Step 608: The second network device skips detecting the link statuses of the N logical links, and sets the link statuses of the N logical links to the link status of the bundled physical link.

In this step, the second network device may further input the link status of each logical link to the second route module corresponding to each of the N logical links.

Optionally, the second network device may further bind N second route modules and the second physical link detection module. In this step, the second network device may record identifiers of the N second route modules in the second physical link detection module, so as to bind the second physical link detection module to the N second route modules. In this way, when the N second route modules request the link status, when detecting the link status of the bundled physical link by using the second physical link detection module, the second network device sets the link statuses of the N logical links to the link status of the bundled physical link, and sends the link status of the bundled physical link to the N second route modules based on the recorded identifiers of the N second route modules. The second route module may calculate a route corresponding to the logical link based on the link status, for example, may perform a calculation operation such as route convergence or rerouting.

Optionally, the second network device may further include logical link detection modules corresponding to the N second route modules, and the second network device may delete the logical link detection modules corresponding to the N second route modules, to release computing resources and network resources occupied by the logical link detection modules corresponding to the N second route modules.

Step 609: The second network device sends a response packet to the first network device through the bundled physical link, where the response packet includes a detection success indication.

Optionally, the diagnosis packet is used as the response packet, and the demand field included in the diagnosis packet carries the detection success indication.

Step 610: The first network device receives the response packet, and skips detecting the link statuses of the N logical links and sets the link statuses of the N logical links to the link status of the bundled physical link under triggering of the detection success indication included in the response packet.

In this step, the second network device may further input the link status of each logical link to the first route module corresponding to each of the N logical links.

Optionally, the first network device binds the N second route modules and the second physical link detection module under triggering of the detection success indication included in the response packet.

Optionally, the first network device may record identifiers of the N first route modules in the first physical link detection module, so as to bind the first physical link detection module to the N first route modules. In this way, when the N first route modules request the link status, when detecting the link status of the bundled physical link by using the first physical link detection module, the first network device sets the link statuses of the N logical links to the link status of the bundled physical link, and sends the link status of the bundled physical link to the N first route modules based on the recorded identifiers of the N first route modules. The first route module may calculate the route corresponding to the logical link based on the link status, for example, may perform the calculation operation such as route convergence or rerouting.

Optionally, the first network device may further include logical link detection modules corresponding to the N first route modules, and the first network device may delete the logical link detection modules corresponding to the N first route modules, to release computing resources and network resources occupied by the logical link detection modules corresponding to the N first route modules.

Optionally, the configuration information entered by the person skilled in the art by using the management device to the second network device may also include a binding command message. In this way, after both the first network device and the second network device obtain the configuration information, the first network device generates the first physical link detection module, determines the N first route modules according to the operations of steps 601 to 603, and sends the diagnosis packet to the second network device. In addition, the second device also generates the second physical link detection module, determines the N second route modules according to the operations of steps 605 to 607, and sends the diagnosis packet to the first network device. When receiving the diagnosis packet sent by the first network device, the second network device binds the second physical link detection module and the N second route modules. When receiving the diagnosis packet sent by the second network device, the first network device buffers the first physical link detection module and the N first route modules.

Optionally, the person skilled in the art may further trigger the first network device to delete the first identifier of the first bundled physical interface or trigger the second network device to delete the first identifier of the second bundled physical interface. Before deleting the first identifier of the first bundled physical interface, the first network device determines whether the first physical link detection module corresponding to the bundled physical link connected to the first bundled physical interface is bound to the first route module. If the first physical link detection module is bound to the first route module, prompt information is sent to the management device corresponding to the person skilled in the art. The indication information is used to indicate that the first physical link detection module corresponding to the bundled physical link connected to the first bundled physical interface is bound to the first route module. If the first physical link detection module is not bound to the first route module, the first identifier of the first bundled physical interface is deleted. Similarly, before deleting the first identifier of the second bundled physical interface, the second network device determines whether the second physical link detection module corresponding to the bundled physical link connected to the second bundled physical interface is bound to the second route module. If the second physical link detection module is bound to the second route module, prompt information is sent to the management device corresponding to the person skilled in the art. The indication information is used to indicate that the second physical link detection module corresponding to the bundled physical link connected to the second bundled physical interface is bound to the second route module. If the second physical link detection module is not bound to the second route module, the first identifier of the second bundled physical interface is deleted.

In this embodiment of this application, after the first network device establishes the first physical link detection module corresponding to the bundled physical link, the first network device obtains the first link information about the bundled physical link, and obtains, based on the first link information, the first link information about the M logical links connected to the M first logical interfaces on the first bundled physical interface. The first network device determines, based on the first link information about the M logical links and the first link information about the bundled physical link, the N logical links carried on the bundled physical link, and sets the link statuses of the N logical links to the link status of the bundled physical link. In this way, the link statuses of the N logical links do not need to be detected, and only the link status of the bundled physical link needs to be input to the first route module corresponding to the N logical links carried on the bundled physical link. In this way, the logical link detection module does not need to be established for each first route module. This reduces occupied computing resources of a network device and reduces occupied network resources.

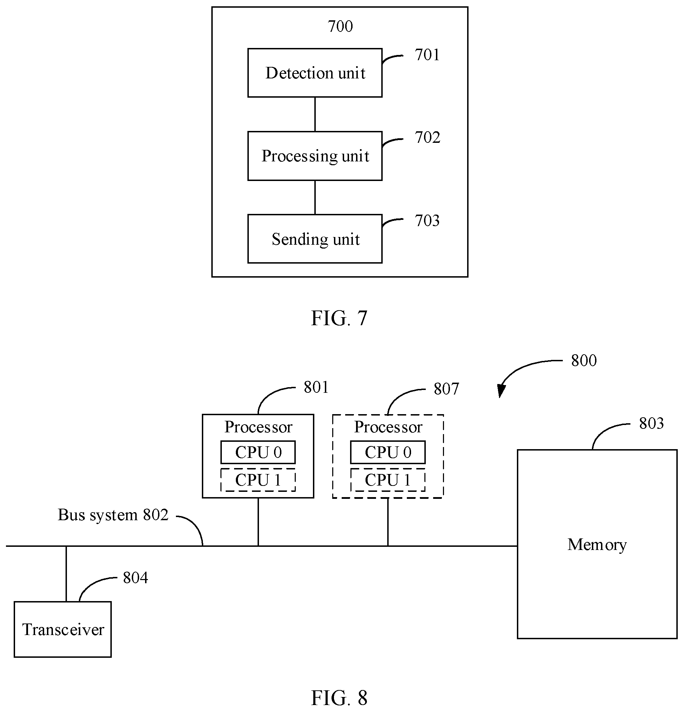

Refer to FIG. 7. An embodiment of this application provides an apparatus 700 for detecting a link status. The apparatus 700 may be deployed on the first network device in any one of the foregoing embodiments, for example, may be deployed on the first network device in the embodiment shown in FIG. 4 or FIG. 6. The apparatus 700 includes a detection unit 701 and a processing unit 702.

The detection unit 701 is configured to detect a link status of a bundled physical link. The bundled physical link is a link between the apparatus 700 and a second network device.

The processing unit 702 is configured to determine N logical links based on link information about the bundled physical link. The N logical links are carried on the bundled physical link, and N is an integer greater than or equal to 1.

The processing unit 702 is further configured to skip detecting link statuses of the N logical links, and set the link statuses of the N logical links to the link status of the bundled physical link.

Optionally, for a detailed implementation process in which the detection unit 701 detects the link status, refer to related content in which the first network device detects the link status in step 402 in the embodiment shown in FIG. 4 or step 601 in the embodiment shown in FIG. 6.

Optionally, for a detailed implementation process in which the processing unit 702 determines the N logical links, refer to related content in which the first network device determines the logical link in step 403 in the embodiment shown in FIG. 4 or step 603 in the embodiment shown in FIG. 6.

Optionally, the processing unit 702 is configured to:
determine, based on the link information about the bundled physical link, M first logical interfaces located on a first bundled physical interface, where M is an integer greater than or equal to N, and the first bundled physical interface is an interface that is on the apparatus 700 and connected to the bundled physical link; and
select the N logical links from M logical links, where the M logical links are logical links connected to the M first logical interfaces.

Optionally, the processing unit 602 is configured to determine, based on the link information about the bundled physical link, the M first logical interfaces that are located on the first bundled physical interface and have addresses.

Optionally, the processing unit 602 is configured to:
obtain link information about the M logical links;
determine, based on link information about the M logical links and the link information about the bundled physical link, N second logical interfaces located on a second bundled physical interface, where the second bundled physical interface is an interface that is on the second network device and connected to the bundled physical link; and
select a logical link connected to the N second logical interfaces.

Optionally, for a detailed implementation process in which the processing unit 702 determines the N second logical interfaces, refer to related content in which the first network device determines the second logical interface in steps 6031 and 6032 in the embodiment shown in FIG. 6.

Optionally, the processing unit 602 is further configured to calculate, based on the link status of each of the N logical links, a route corresponding to each logical link.

Optionally, refer to FIG. 7. The apparatus 700 further includes a sending unit 703.

The sending unit 703 is configured to send a diagnosis packet to the second network device. The diagnosis packet includes a detection indication, and the detection indication is used to indicate the second network device to detect the link status of the bundled physical link and set the link statuses of the N logical links to the link status of the bundled physical link.

Optionally, a demand field of the diagnosis packet includes the detection indication.

In this embodiment of this application, the detection unit detects the link status of the bundled physical link. The processing unit determines, based on the link information about the bundled physical link, the N logical links carried on the bundled physical link, where N is an integer greater than or equal to 1. Then, the processing unit skips detecting the link statuses of the N logical links, and sets the link statuses of the N logical links to the link status of the bundled physical link. In this way, the detection unit may obtain the link statuses of the N logical links by detecting only a link status of one bundled physical link, and the link status of each of the N logical links does not need to be detected. Therefore, occupied computing resources of a network device and occupied network resources of a communications network are reduced.

FIG. 8 is a schematic diagram of an apparatus 800 for detecting a link status according to an embodiment of this application. The apparatus 800 may be the first network device in any one of the foregoing embodiments. For example, the apparatus 800 may be the first network device in the embodiment shown in FIG. 4 or FIG. 6. The apparatus 800 includes at least one processor 801, a bus system 802, a memory 803, and at least one transceiver 804.

The apparatus 800 is an apparatus of a hardware structure, and may be configured to implement function modules in the apparatus 700 shown in FIG. 7. For example, a person skilled in the art may figure out that the detection unit 701 and the processing unit 702 in the apparatus 700 shown in FIG. 7 may be implemented by the at least one processor 801 by invoking code in the memory 803, and the sending unit 703 in the apparatus 700 shown in FIG. 7 may be implemented by the transceiver 804.

Optionally, the apparatus 800 may be further configured to implement a function of the collection analysis device in any one of the foregoing embodiments.

Optionally, the processor 801 may be a general-purpose central processing unit (central processing unit, CPU), a microprocessor, an application-specific integrated circuit (application-specific integrated circuit, ASIC), or one or more integrated circuits for controlling program execution of the solutions of this application.

The bus system 802 may include a path to transmit information between the foregoing components.

The transceiver 804 is configured to communicate with another device or a communications network.

The memory 803 may be a read-only memory (read-only memory, ROM) or another type of static storage device that can store static information and an instruction, a random access memory (random access memory, RAM) or another type of dynamic storage device that can store information and an instruction, an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact disc, a laser disc, an optical disc, a digital versatile disc, a Blu-ray optical disc, or the like), a magnetic disk storage medium or another magnetic storage device, or any other medium that can carry or store expected program code in a form of an instruction or a data structure and that can be accessed by a computer, but the memory 803 is not limited thereto. The memory may exist independently, and is connected to the processor through a bus. The memory may alternatively be integrated with the processor.

The memory 803 is configured to store application code for executing the solutions in this application, and the processor 801 controls the execution. The processor 801 is configured to execute the application code stored in the memory 803, so that the apparatus 800 implements a function in the method in this patent.

During specific implementation, in an embodiment, the processor 801 may include one or more CPUs, for example, a CPU 0 and a CPU 1 in FIG. 8.

During specific implementation, in an embodiment, the apparatus 800 may include a plurality of processors, for example, the processor 801 and a processor 807 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A method for detecting a link status, wherein the method comprises:
detecting, by a first network device (1), a link status of a bundled physical link (5), wherein the bundled physical link (5) is a link between the first network device (1) and a second network device (2); and
determining, by the first network device (1), N logical links based on link information about the bundled physical link (5), wherein the N logical links are carried on the bundled physical link (5), and N is an integer greater than or equal to 1;
**characterized in that**
after the determining N logical links based on link information about the bundled physical link (5), the method further comprises:
sending a diagnosis packet to the second network device (2), wherein the diagnosis packet comprises a detection indication, and the detection indication is used to indicate the second network device (2) to detect the link status of the bundled physical link (5) and set the link statuses of the N logical links to the link status of the bundled physical link (5);
receiving a response packet from the second network device (2), wherein the response packet includes a detection success indication; and
setting the link statuses of the N logical links to the link status of the bundled physical link.

2. The method according to claim 1, wherein the determining N logical links based on link information about the bundled physical link (5) comprises:
determining, based on the link information about the bundled physical link (5), M first logical interfaces located on a first bundled physical interface (3), wherein M is an integer greater than or equal to N, and the first bundled physical interface (3) is an interface that is on the first network device (1) and connected to the bundled physical link (5); and
selecting the N logical links from M logical links, wherein the M logical links are logical links connected to the M first logical interfaces.

3. The method according to claim 2, wherein the determining, based on the link information about the bundled physical link (5), M first logical interfaces located on a first bundled physical interface (3) comprises:
determining, based on the link information about the bundled physical link (5), the M first logical interfaces that are located on the first bundled physical interface (3) and have addresses.

4. The method according to claim 2 or 3, wherein the selecting the N logical links from M logical links comprises:
obtaining link information about the M logical links;
determining, based on the link information about the M logical links and the link information about the bundled physical link (5), N second logical interfaces located on a second bundled physical interface (4), wherein the second bundled physical interface (4) is an interface that is on the second network device (2) and connected to the bundled physical link (5); and
selecting a logical link connected to the N second logical interfaces.

5. The method according to any one of claims 1 to 4, wherein after the setting the link statuses of the N logical links to the link status of the bundled physical link (5), the method further comprises:
calculating, based on the link status of each of the N logical links, a route corresponding to each logical link.

6. The method according to any one of claims 1 to 5, wherein a demand field of the diagnosis packet comprises the detection indication.

7. An apparatus (700) for detecting a link status, wherein the apparatus (700) comprises a detection unit (701) and a processing unit (702), wherein
the detection unit (701) is configured to detect a link status of a bundled physical link (5), wherein the bundled physical link (5) is a link between the apparatus (700) and a second network device (2); and
the processing unit (702) is configured to determine N logical links based on link information about the bundled physical link (5), wherein the N logical links are carried on the bundled physical link (5), and N is an integer greater than or equal to 1;
**characterized in that**
the apparatus (700) further comprises:
a sending unit (703), configured to send a diagnosis packet to the second network device (2), wherein the diagnosis packet comprises a detection indication, and the detection indication is used to indicate the second network device (2) to detect the link status of the bundled physical link (5) and set the link statuses of the N logical links to the link status of the bundled physical link (5);
a unit configured to receive a response packet from the second network device (2), wherein the response packet includes a detection success indication; and
another unit configured to set the link statuses of the N logical links to the link status of the bundled physical link.

8. The apparatus (700) according to claim 7, wherein the processing unit (702) is configured to:
determine, based on the link information about the bundled physical link (5), M first logical interfaces located on a first bundled physical interface (3), wherein M is an integer greater than or equal to N, and the first bundled physical interface (3) is an interface that is on the apparatus (700) and connected to the bundled physical link (5); and
select the N logical links from M logical links, wherein the M logical links are logical links connected to the M first logical interfaces.

9. The apparatus (700) according to claim 8, wherein the processing unit (702) is configured to determine, based on the link information about the bundled physical link (5), the M first logical interfaces that are located on the first bundled physical interface (3) and have addresses.

10. The apparatus (700) according to claim 8 or 9, wherein the processing unit (702) is configured to:
obtain link information about the M logical links;
determine, based on the link information about the M logical links and the link information about the bundled physical link (5), N second logical interfaces located on a second bundled physical interface (4), wherein the second bundled physical interface (4) is an interface that is on the second network device (2) and connected to the bundled physical link (5); and
select a logical link connected to the N second logical interfaces.

11. The apparatus (700) according to any one of claims 7 to 10, wherein the processing unit (702) is further configured to calculate, based on the link status of each of the N logical links, a route corresponding to each logical link.

12. The apparatus (700) according to any one of claims 7 to 11, wherein a demand field of the diagnosis packet comprises the detection indication.

13. A network system comprising a first network device (1) and a second network device (2), wherein the first network device (1) is configured to implement the method according to any one of claims 1 to 6.

## Patentansprüche

1. Verfahren zum Detektieren eines Link-Zustands, wobei das Verfahren Folgendes umfasst:
Detektieren eines Link-Zustands eines gebündelten physischen Links (5) durch eine erste Netzwerkeinrichtung (1), wobei der gebündelte physische Link (5) ein Link zwischen der ersten Netzwerkeinrichtung (1) und einer zweiten Netzwerkeinrichtung (2) ist; und
Bestimmen von N logischen Links durch die erste Netzwerkeinrichtung (1) basierend auf Link-Informationen über den gebündelten physischen Link (5), wobei die N logischen Links auf dem gebündelten physischen Link (5) enthalten sind und N eine ganze Zahl größer oder gleich 1 ist;
**dadurch gekennzeichnet, dass**
das Verfahren nach dem Bestimmen von N logischen Links basierend auf Link-Informationen über den gebündelten physischen Link (5) ferner Folgendes umfasst:
Senden eines Diagnosepakets an die zweite Netzwerkeinrichtung (2), wobei das Diagnosepaket eine Detektionsanzeige umfasst, und die Detektionsanzeige verwendet wird, um die zweite Netzwerkeinrichtung (2) anzuweisen, den Link-Zustand des gebündelten physischen Links (5) zu detektieren und die Link-Zustände der N logischen Links auf den Link-Zustand des gebündelten physischen Links (5) festzulegen;
Empfangen eines Antwortpakets aus der zweiten Netzwerkeinrichtung (2), wobei das Antwortpaket eine Detektionserfolgsanzeige beinhaltet; und
Festlegen der Link-Zustände der N logischen Links auf den Link-Zustand des gebündelten physischen Links.

2. Verfahren nach Anspruch 1, wobei das Bestimmen von N logischen Links basierend auf Link-Informationen über den gebündelten physischen Link (5) Folgendes umfasst:
Bestimmen von M ersten logischen Schnittstellen, die sich auf einer ersten gebündelten physischen Schnittstelle (3) befinden, basierend auf den Link-Informationen über den gebündelten physischen Link (5), wobei M eine ganze Zahl größer oder gleich N ist, und die erste gebündelte physische Schnittstelle (3) eine Schnittstelle ist, die auf der ersten Netzwerkeinrichtung (1) vorliegt und mit dem gebündelten physischen Link (5) verbunden ist; und
Auswählen der N logischen Links aus M logischen Links, wobei die M logischen Links logische Links sind, die mit den M ersten logischen Schnittstellen verbunden sind.

3. Verfahren nach Anspruch 2, wobei das Bestimmen von M ersten logischen Schnittstellen, die sich auf einer ersten gebündelten physischen Schnittstelle (3) befinden, basierend auf den Link-Informationen über den gebündelten physischen Link (5) Folgendes umfasst:
Bestimmen der M ersten logischen Schnittstellen, die sich auf der ersten gebündelten physischen Schnittstelle (3) befinden und Adressen aufweisen, basierend auf den Link-Informationen über den gebündelten physischen Link (5).

4. Verfahren nach Anspruch 2 oder 3, wobei das Auswählen der N logischen Links aus M logischen Links Folgendes umfasst:
Erlangen von Link-Informationen über die M logischen Links;
Bestimmen von N zweiten logischen Schnittstellen, die sich auf einer zweiten gebündelten physischen Schnittstelle (4) befinden, basierend auf den Link-Informationen über die M logischen Links und den Link-Informationen über den gebündelten physischen Link (5), wobei die zweite gebündelte physische Schnittstelle (4) eine Schnittstelle ist, die auf der zweiten Netzwerkeinrichtung (2) vorliegt und mit dem gebündelten physischen Link (5) verbunden ist; und
Auswählen eines logischen Links, der mit den N zweiten logischen Schnittstellen verbunden ist.

5. Verfahren nach einem der Ansprüche 1 bis 4, wobei das Verfahren nach dem Festlegen der Link-Zustände der N logischen Links auf den Link-Zustand des gebündelten physischen Links (5) ferner Folgendes umfasst:
Berechnen einer Route entsprechend jedem logischen Link basierend auf dem Link-Zustand jedes der N logischen Links.

6. Verfahren nach einem der Ansprüche 1 bis 5, wobei ein Bedarfsfeld des Diagnosepakets die Detektionsanzeige umfasst.

7. Vorrichtung (700) zum Detektieren eines Link-Zustands, wobei die Vorrichtung (700) eine Detektionseinheit (701) und eine Verarbeitungseinheit (702) umfasst, wobei
die Detektionseinheit (701) dazu konfiguriert ist, einen Link-Zustand eines gebündelten physischen Links (5) zu detektieren, wobei der gebündelte physische Link (5) ein Link zwischen der Vorrichtung (700) und einer zweiten Netzwerkeinrichtung (2) ist; und
die Verarbeitungseinheit (702) dazu konfiguriert ist, N logische Links basierend auf Link-Informationen über den gebündelten physischen Link (5) zu bestimmen, wobei die N logischen Links auf dem gebündelten physischen Link (5) enthalten sind und N eine ganze Zahl größer oder gleich 1 ist;
**dadurch gekennzeichnet, dass**
die Vorrichtung (700) ferner Folgendes umfasst:
eine Sendeeinheit (703), die dazu konfiguriert ist, ein Diagnosepaket an die zweite Netzwerkeinrichtung (2) zu senden, wobei das Diagnosepaket eine Detektionsanzeige umfasst, und die Detektionsanzeige verwendet wird, um die zweite Netzwerkeinrichtung (2) anzuweisen, den Link-Zustand des gebündelten physischen Links (5) zu detektieren und die Link-Zustände der N logischen Links auf den Link-Zustand des gebündelten physischen Links (5) festzulegen;
eine Einheit, die dazu konfiguriert ist, ein Antwortpaket aus der zweiten Netzwerkeinrichtung (2) zu empfangen, wobei das Antwortpaket eine Detektionserfolgsanzeige beinhaltet; und
eine andere Einheit, die dazu konfiguriert ist, die Link-Zustände der N logischen Links auf den Link-Zustand des gebündelten physischen Links festzulegen.

8. Vorrichtung (700) nach Anspruch 7, wobei die Verarbeitungseinheit (702) ferner dazu konfiguriert ist:
M erste logische Schnittstellen, die sich auf einer ersten gebündelten physischen Schnittstelle (3) befinden, basierend auf den Link-Informationen über den gebündelten physischen Link (5) zu bestimmen, wobei M eine ganze Zahl größer oder gleich N ist, und die erste gebündelte physische Schnittstelle (3) eine Schnittstelle ist, die auf der Vorrichtung (700) vorliegt und mit dem gebündelten physischen Link (5) verbunden ist; und
die N logischen Links aus M logischen Links auszuwählen, wobei die M logischen Links logische Links sind, die mit den M ersten logischen Schnittstellen verbunden sind.

9. Vorrichtung (700) nach Anspruch 8, wobei die Verarbeitungseinheit (702) dazu konfiguriert ist, die M ersten logischen Schnittstellen, die sich auf der ersten gebündelten physischen Schnittstelle (3) befinden und Adressen aufweisen, basierend auf den Link-Informationen über den gebündelten physischen Link (5) zu bestimmen.

10. Vorrichtung (700) nach Anspruch 8 oder 9, wobei die Verarbeitungseinheit (702) ferner dazu konfiguriert ist:
Link-Informationen über die M logischen Links zu erlangen;
N zweite logische Schnittstellen, die sich auf einer zweiten gebündelten physischen Schnittstelle (4) befinden, basierend auf den Link-Informationen über die M logischen Links und den Link-Informationen über den gebündelten physischen Link (5) zu bestimmen, wobei die zweite gebündelte physische Schnittstelle (4) eine Schnittstelle ist, die auf der zweiten Netzwerkeinrichtung (2) vorliegt und mit dem gebündelten physischen Link (5) verbunden ist; und
einen logischen Link, der mit den N zweiten logischen Schnittstellen verbunden ist, auszuwählen.

11. Vorrichtung (700) nach einem der Ansprüche 7 bis 10, wobei die Verarbeitungseinheit (702) ferner dazu konfiguriert ist, eine Route entsprechend jedem logischen Link basierend auf dem Link-Zustand jedes der N logischen Links zu berechnen.

12. Vorrichtung (700) nach einem der Ansprüche 7 bis 11, wobei das Bedarfsfeld des Diagnosepakets die Detektionsanzeige umfasst.

13. Netzwerksystem, umfassend eine erste Netzwerkeinrichtung (1) und eine zweite Netzwerkeinrichtung (2), wobei die erste Netzwerkeinrichtung (1) dazu konfiguriert ist, das Verfahren nach einem der Ansprüche 1 bis 6 zu implementieren.

## Revendications

1. Procédé permettant de détecter un état de liaison, dans lequel le procédé comprend :
la détection, par un premier dispositif réseau (1), d'un état de liaison d'une liaison physique groupée (5), dans lequel la liaison physique groupée (5) est une liaison entre le premier dispositif réseau (1) et un second dispositif réseau (2) ; et
la détermination, par le premier dispositif réseau (1), de N liaisons logiques sur la base d'informations de liaison concernant la liaison physique groupée (5), dans lequel les N liaisons logiques sont transportées sur la liaison physique groupée (5), et N est un entier supérieur ou égal à 1 ;
**caractérisé en ce que**
après la détermination de N liaisons logiques sur la base d'informations de liaison concernant la liaison physique groupée (5), le procédé comprend également :
l'envoi d'un paquet de diagnostic au second dispositif réseau (2), dans lequel le paquet de diagnostic comprend une indication de détection, et l'indication de détection est utilisée pour indiquer au second dispositif réseau (2) de détecter l'état de liaison de la liaison physique groupée (5) et de définir les états de liaison des N liaisons logiques sur l'état de liaison de la liaison physique groupée (5) ;
la réception d'un paquet de réponse à partir du second dispositif réseau (2), dans lequel le paquet de réponse comporte une indication de succès de détection ; et
la définition des états de liaison des N liaisons logiques sur l'état de liaison de la liaison physique groupée.

2. Procédé selon la revendication 1, dans lequel la détermination de N liaisons logiques sur la base d'informations de liaison concernant la liaison physique groupée (5) comprend :
la détermination, sur la base des informations de liaison concernant la liaison physique groupée (5), de M premières interfaces logiques situées sur une première interface physique groupée (3), dans lequel M est un entier supérieur ou égal à N,
et la première interface physique groupée (3) est une interface qui est sur le premier dispositif réseau (1) et connectée à la liaison physique groupée (5) ; et
la sélection des N liaisons logiques à partir de M liaisons logiques, dans lequel les M liaisons logiques sont des liaisons logiques connectées aux M premières interfaces logiques.

3. Procédé selon la revendication 2, dans lequel la détermination, sur la base des informations de liaison concernant la liaison physique groupée (5), de M premières interfaces logiques situées sur une première interface physique groupée (3) comprend :
la détermination, sur la base des informations de liaison concernant la liaison physique groupée (5), des M premières interfaces logiques qui sont situées sur la première interface physique groupée (3) et qui ont des adresses.

4. Procédé selon la revendication 2 ou 3, dans lequel la sélection des N liaisons logiques à partir de M liaisons logiques comprend :
l'obtention d'informations de liaison concernant les M liaisons logiques ;
la détermination, sur la base des informations de liaison concernant les M liaisons logiques et des informations de liaison concernant la liaison physique groupée (5), de N secondes interfaces logiques situées sur une seconde interface physique groupée (4), dans lequel la seconde interface physique groupée (4) est une interface qui est sur le second dispositif réseau (2) et connectée à la liaison physique groupée (5) ; et
la sélection d'une liaison logique connectée aux N secondes interfaces logiques.

5. Procédé selon l'une quelconque des revendications 1 à 4, dans lequel après la définition des états de liaison des N liaisons logiques sur l'état de liaison de la liaison physique groupée (5), le procédé comprend également :
le calcul, sur la base de l'état de liaison de chacune des N liaisons logiques, d'un itinéraire correspondant à chaque liaison logique.

6. Procédé selon l'une quelconque des revendications 1 à 5, dans lequel un champ de demande du paquet de diagnostic comprend l'indication de détection.

7. Appareil (700) permettant de détecter un état de liaison, dans lequel l'appareil (700) comprend une unité de détection (701) et une unité de traitement (702), dans lequel
l'unité de détection (701) est configurée pour détecter un état de liaison d'une liaison physique groupée (5), dans lequel la liaison physique groupée (5) est une liaison entre l'appareil (700) et un second dispositif réseau (2) ; et
l'unité de traitement (702) est configurée pour déterminer N liaisons logiques sur la base d'informations de liaison concernant la liaison physique groupée (5), dans lequel les N liaisons logiques sont transportées sur la liaison physique groupée (5), et N est un entier supérieur ou égal à 1 ; **caractérisé en ce que**
l'appareil (700) comprend également :
une unité d'envoi (703), configurée pour envoyer un paquet de diagnostic au second dispositif réseau (2), dans lequel le paquet de diagnostic comprend une indication de détection, et l'indication de détection est utilisée pour indiquer au second dispositif réseau (2) de détecter l'état de liaison de la liaison physique groupée (5) et de définir les états de liaison des N liaisons logiques sur l'état de liaison de la liaison physique groupée (5) ;
une unité configurée pour recevoir un paquet de réponse à partir du second dispositif réseau (2), dans lequel le paquet de réponse comporte une indication de succès de détection ; et
une autre unité configurée pour définir les états de liaison des N liaisons logiques sur l'état de liaison de la liaison physique groupée.

8. Appareil (700) selon la revendication 7, dans lequel l'unité de traitement (702) est configurée pour :
déterminer, sur la base des informations de liaison concernant la liaison physique groupée (5), M premières interfaces logiques situées sur une première interface physique groupée (3), dans lequel M est un entier supérieur ou égal à N, et la première interface physique groupée (3) est une interface qui est sur l'appareil (700) et connectée à la liaison physique groupée (5) ; et
sélectionner les N liaisons logiques à partir de M liaisons logiques, dans lequel les M liaisons logiques sont des liaisons logiques connectées aux M premières interfaces logiques.

9. Appareil (700) selon la revendication 8, dans lequel l'unité de traitement (702) est configurée pour déterminer, sur la base des informations de liaison concernant la liaison physique groupée (5), les M premières interfaces logiques qui sont situées sur la première interface physique groupée (3) et qui ont des adresses.

10. Appareil (700) selon la revendication 8 ou 9, dans lequel l'unité de traitement (702) est configurée pour :
obtenir des informations de liaison concernant les M liaisons logiques ;
déterminer, sur la base des informations de liaison concernant les M liaisons logiques et des informations de liaison concernant la liaison physique groupée (5), N secondes interfaces logiques situées sur une seconde interface physique groupée (4), dans lequel la seconde interface physique groupée (4) est une interface qui est sur le second dispositif réseau (2) et connectée à la liaison physique groupée (5) ; et
sélectionner une liaison logique connectée aux N secondes interfaces logiques.

11. Appareil (700) selon l'une quelconque des revendications 7 à 10, dans lequel l'unité de traitement (702) est également configurée pour calculer, sur la base de l'état de liaison de chacune des N liaisons logiques, un itinéraire correspondant à chaque liaison logique.

12. Appareil (700) selon l'une quelconque des revendications 7 à 11, dans lequel un champ de demande du paquet de diagnostic comprend l'indication de détection.

13. Système de réseau comprenant un premier dispositif réseau (1) et un second dispositif réseau (2), dans lequel le premier dispositif réseau (1) est configuré pour mettre en œuvre le procédé selon l'une quelconque des revendications 1 à 6.
